# EUROPÄISCHE PATENTANMELDUNG

(11) **EP 1 338 202 A1**
(43) Veröffentlichungstag der Anmeldung: **27.08.2003**
(21) Anmeldenummer: 02004115.8
(22) Anmeldetag: 25.02.2002
(51) Int. Cl.: A21C 9/06, A21C 11/10

(54) **Teigformmaschine mit Schneidrädern**

(71) Anmelder: Palásti, Jozsef, 6115 Kunszállás (HU)
(72) Erfinder: Palásti, Jozsef, 6115 Kunszállás (HU)
(74) Vertreter: Glawe, Delfs, Moll & Partner

(57) **Zusammenfassung**

Teigformmaschine für gefüllte Backstücke, insbesondere gefülltes Kleingebäck, mit einer Arbeitsfläche (1) zum Auflegen von Teigmaterial (3) für die Backstücke, einer Mehrzahl von Schneidrädern (12), die zum Schneiden des Teigmaterials (3) auf der Arbeitsfläche (1) angeordnet sind, und einer Antriebseinrichtung zum Erzeugen einer Relativbewegung zwischen den Schneidrädern (12) und der Arbeitsfläche (1) in einer Arbeitsrichtung, wobei die Schneidräder (12) mit Druckrollen (22, 23) versehen sind, die seitlich an den Schneidrädern (12) und koaxial zu ihnen angeordnet sind. Beansprucht wird ferner ein Verfahren zum Formen von gefüllten Backstücken, mit den Schritten: Ausbringen einer unteren Teiglage (30), Auftragen einer Füllung (31) auf die untere Teiglage, Aufbringen einer oberen Teiglage (32) auf die untere Teiglage (30) mit der Füllung (31), Schneiden der Teiglagen mit der Füllung (30, 31, 32) in Reihen (33), wobei gleichzeitig mit dem Schneiden ein Zusammendrücken von Rändern (131, 132) im Schnittbereich erfolgt.

## Beschreibung

Die Erfindung betrifft eine Teigformmaschine für gefüllte Backstücke, insbesondere gefülltes Kleingebäck, mit einer Arbeitsfläche, auf der Teigmaterial für die Backstücke ausgebreitet ist, und einer Mehrzahl von Schneidrädern, die zum Schneiden des Teigmaterials auf der Arbeitsfläche angeordnet sind, und einer Antriebseinrichtung zum Erzeugen einer Relativbewegung zwischen den Schneidrädern und der Arbeitsfläche in einer Arbeitsrichtung.

Zur Herstellung von gefüllten Backstücken ist es erforderlich, daß die Füllung vollständig von dem Teigmaterial der Backstücke umschlossen ist. Andernfalls besteht die Gefahr, daß die Füllung bereits vor dem Verzehr der Backstücke austritt, sei es bereits bei dem Backvorgang selbst oder nachfolgend bei Transport bzw. Lagerung. Das Austreten der Füllung würde die Backstücke unverkäuflich machen und ist daher zu vermeiden. Solche gefüllten Backstücke werden üblicherweise derart hergestellt, daß zuerst ein unteres Teigblatt geformt wird, auf das dann die Füllung aufgebracht wird und schließlich mit einem oberen Teigblatt abgedeckt wird. Das obere Teigblatt wird dabei entweder gesondert zugeführt oder entsteht durch Umklappen eines Teils des unteren Teigblatts entlang einer Klapplinie. In beiden Fällen entsteht ein mehrlagiger Aufbau des Backstücks mit einer unteren und oberen Teiglage sowie einer dazwischen liegenden Füllung. Eine Schwierigkeit einer Verarbeitung des gefüllten Teigmaterials besteht nun darin, daß beim Schneiden des Teigmaterials an den beim Schneiden entstehenden Rändern der Backstücke die Füllung aus den Backstücken austreten kann. Um das zu verhindern, müssen die obere und die untere Teiglage an den jeweiligen Rändern miteinander verbunden werden. Herkömmlicherweise geschieht das entweder von Hand oder maschinell durch Druckwalzen. In dem ersten Fall werden die Stellen des Teigmaterials, an denen geschnitten werden soll, mit den Fingern oder dem Handrücken zusammengedrückt und somit verbunden. Nachteilig an dieser Methode ist, daß Handarbeit generell sehr aufwendig ist und insbesondere bei gefüllten Kleingebäck kaum noch praktikabel ist. Zur Ausführung der zweiten Methode, nämlich die untere und obere Teiglage mittels einer Druckwalze zusammenzudrücken, sind Teigformmaschinen aus offenkundiger Vorbenutzung bekannt. Bei diesen wird das unten liegende Teigmaterial entlang einer etwa mittig verlaufenden Klapplinie umgeklappt und bedeckt auf diese Weise als obere Teiglage die Füllung. Dabei ist die Randseite entlang der Klapplinie durch das Umklappen von selbst geschlossen, ohne daß es dazu weiterer Handlungen bedarf. Zum Verschließen der gegenüberliegenden Randseite ist eine Druckwalze vorgesehen, die zum Zusammendrücken der Ränder der oberen und unteren Teiglage dient. Nachteilig an diesen Walzen ist, daß sie verhältnismäßig platzraubend sind. Daher werden sie üblicherweise nur an solchen Teigformmaschinen eingesetzt, die das Teigblatt umklappen und somit ein Verschließen nur an dem der Klapplinie gegenüberliegenden Rand erfordern. Aufgrund ihrer Baugröße stößt die Anwendung der Druckwalzen bei Teigformmaschinen, die mehrere parallele Reihen von Backstücken verarbeiten, auf Schwierigkeiten. Bei Maschinen zur Herstellung von Kleingebäck können sie aufgrund ihrer Baugröße nicht verwendet werden.

Der Erfindung liegt die Aufgabe zugrunde eine Teigformmaschine der eingangs genannten Art zu schaffen, die bei geringer Baugröße ein Schneiden und sicheres Verschließen der Ränder ermöglicht.

Die erfindungsgemäße Lösung besteht in einer Teigformmaschine mit den Merkmalen des Anspruchs 1 und einem Verfahren gemäß Anspruch ?. Vorteilhafte Weiterbildungen ergeben sich aus den Unteransprüchen.

Erfindungsgemäß ist bei einer Teigformmaschine für gefüllte Backstücke, insbesondere gefülltes Kleingebäck, mit einer Arbeitsfläche zum Auflegen von Teigmaterial, einer Mehrzahl von Schneidrädern, die zum Schneiden des Teigmaterials auf der Arbeitsfläche angeordnet sind, und einer Antriebseinrichtung zum Erzeugen einer Relativbewegung zwischen den Schneidrädern und der Arbeitsfläche in einer Arbeitsrichtung vorgesehen, daß die Schneidräder mit Druckrollen versehen sind, die seitlich an den Schneidrädern und koaxial zu ihnen angeordnet sind. Der Kern der Erfindung liegt demnach darin, die Schneidräder mit seitlichen und koaxialen Druckrollen zu kombinieren. Die Kombination aus Schneidrad und Druckrolle erlaubt es, in einem Arbeitsgang das Material zu schneiden und dabei zugleich die beim Schneiden entstehenden Ränder zusammenzudrücken, so daß ein Aufklaffen der Schneidränder und damit ein unerwünschtes Austreten von Füllmaterial vermieden wird.

Außerdem wird erreicht, daß die Funktionen des Schneidens und Verschließens in einer sehr kompakten Baueinheit vereinigt sind, also mit einem Minimum an Bauraum realisiert sind. Die aus dem Stand der Technik bekannten gesonderten Druckwalzen zum Zusammendrücken der Teiglagen benötigen dem gegenüber erheblich mehr Bauraum. Dem gegenüber ermöglicht es die erfindungsgemäße Kombination aufgrund ihrer Kompaktheit, daß mehrere Schneidräder mit Druckrollen mit geringem Abstand voneinander angeordnet werden können. Auf diese Weise wird erreicht, daß auf einer gegebenen Arbeitsflächenbreite mehr Reihen von Gebäckstücken nebeneinander hergestellt werden können. So können beispielsweise auf einer üblichen Arbeitsbreite von 440 mm etwa 10 bis 22 Reihen nebeneinander bearbeitet werden, gegenüber etwa 6 Reihen bei herkömmlichen Teigformmaschinen. Außerdem gelingt durch die kompakte Baugröße der Schneidräder mit den Druckrollen der damit ermöglichten Anordnung in geringem Abstand die Herstellung kleinerer Backstücke, wie insbesondere gefülltes Kleingebäck, wie es vorher weder mit der manuellen Methode noch mit Teigformmaschinen mit gesonderter Druckwalze möglich war.

Die erfindungsgemäße Kombination aus Schneidrad und Druckrollen hat nämlich außer der kompakten Bauform ferner den Vorteil, daß durch die konstruktive Gestaltung stets sichergestellt ist, daß die Schneidkante innerhalb des Bereichs liegt, der von den Druckrollen zusammengedrückt worden ist. Der anzudrückende Bereich kann damit klein gewählt werden, was wiederum die Herstellung kleinerer Backstücke ermöglicht. Bei gesonderten Druckwalzen, wie sie aus dem Stand der Technik bekannt sind, muß aufgrund unvermeidlicher Toleranzen bei dem Transport des Teigmaterials der Bereich, in dem angedrückt wird, breiter gewählt werden, um sicher zu gewährleisten, daß der Schnitt auch in diesem Bereich erfolgt.

Vorteilhafterweise ist vorgesehen, daß die Druckrollen eine Konusform aufweisen. Dabei sind zweckmäßigerweise die Druckrollen mit ihrem größeren Durchmesser zur Schneidscheibe hin weisend angeordnet. Auf diese Weise wird der Druck, mit dem die Ränder aneinandergedrückt werden, so verteilt, daß der größte Druck an der Seite des Randbereichs wirkt, der von der Füllung am weitesten abgewandt ist. Ein Quetschen der Füllung mit entsprechend unerwünschten Folgen wird auf diese Weise vermieden. Zweckmäßigerweise ist der Konus dazu so ausgebildet, daß seine Mantellinie um einen Winkel von 30° bis 60°, vorzugsweise 45°, gegenüber seiner Mittelachse geneigt ist.

Zweckmäßigerweise beträgt das Verhältnis der Radien der Druckrollen zu dem des Schneidrads etwa 0,7 bis 0,95, vorzugsweise 0,85 bis 0,90. Die genannten Verhältnisse stellen einen bewährten Kompromiß zwischen einem sicheren Zusammendrücken der unteren und oberen Teiglage einerseits sowie dem Vermeiden eines zu starken Quetschens des Teigmaterials andererseits dar. Es versteht sich, daß das Verhältnis mit Blick auf die Dicke des zu verarbeitenden Teigmaterials gewählt ist. Vorzugsweise ist dabei der Unterschied zwischen dem Radius des Schneidrads und dem der Druckrolle gleich groß oder sogar etwas kleiner als die zusammenaddierten Dicken der unteren und oberen Teiglagen; bewährt hat sich ein Verhältnis des Radiusunterschieds zu der Teigdicke von etwa 7/8.

Zweckmäßigerweise sind die Schneidräder mit den Druckrollen quer zur Arbeitsrichtung über die volle Breite der Arbeitsfläche angeordnet. Damit kann die gesamte Breite der Arbeitsfläche zur Herstellung der Backstücke verwendet werden. Es hat sich dabei als zweckmäßig herausgestellt, wenn die Schneidräder etwa 1 bis 4 cm, vorzugsweise 1,5 bis 2,5 cm voneinander beabstandet angeordnet sind. Mit einem solch geringen Abstand kann eine hohe Anzahl von Reihen auf einer gegebenen Arbeitsbreite erreicht werden, wodurch insbesondere eine effiziente Herstellung von Kleingebäck mit seinen geringen Abmessungen ermöglicht wird.

Vorzugsweise ist die Breite der Druckrollen für jedes der Schneidräder nicht größer als 8 mm, vorzugsweise 6 mm. Dank der erfindungsgemäßen Anordnung der Druckrollen seitlich an den Schneidrädern wird trotz der geringen Breite des zusammengedrückten Bereichs ein sicheres Verschließen erzielt.

Vorzugsweise ist vorgesehen, daß die Druckrollen drehbeweglich gegenüber dem Schneidrad angeordnet sind. Dies ermöglicht eine Drehung der Druckrollen unabhängig von der Drehung der Schneidräder. Aufgrund der unterschiedlichen Radien von Schneidrad und Druckrolle hat eine drehfeste Anordnung der Druckrollen an den Schneidrädern zur Folge, daß sich unterschiedliche Umfangsgeschwindigkeiten ergeben. In der Regel wird das zwar nicht zu Schwierigkeiten führen, jedoch kann es in Einzelfällen zu Beschädigungen der Teigoberfläche kommen. Eine drehbewegliche Anordnung der Druckrollen schafft hier Abhilfe.

Vorzugsweise weisen die Druckrollen eine gewellte Umfangsfläche auf. Eine solche Gestaltung der Umfangsfläche ist insbesondere bei empfindlichem Teigmaterial, wie Blätterteig oder Plunderteig von Vorteil. Solche Teigarten weisen einen mehrschichtigen Aufbau auf, dessen Struktur durch Druck leicht zerstört werden kann; es hat sich gezeigt, daß durch die gewellte Ausführung der Umfangsfläche die durch Druckbeaufschlagung hervorgerufenen Störungen vermindert werden können.

Die Erfindung erstreckt sich auch auf ein Verfahren zum Formen von gefüllten Backstücken, insbesondere gefülltes Kleingebäck, mit den Schritten Ausbringen einer unteren Teiglage, Auftragen einer Füllung auf die untere Teiglage, Aufbringen einer oberen Teiglage auf die untere Teiglage mit der Füllung, Schneiden der Teiglagen mit der Füllung in mehrere Reihen, wobei gleichzeitig mit dem Schneiden im Schnittbereich ein Zusammendrücken von Schnitträndern erfolgt. Damit wird der zusätzliche Aufwand, der durch einen gesonderten Schritt zum Zusammendrücken der Ränder in den Stückbereichen verursacht wird, vermieden. Außerdem erhöht sich durch das gleichzeitige Zusammendrücken und Schneiden die Qualität des Schnitts. Das liegt daran, daß durch das gleichzeitige Schneiden und Zusammendrücken ein Aufklaffen der Schnittkanten verhindert wird, dadurch daß eben zur selben Zeit die Ränder zusammengedrückt werden.

Ein Ausführungsbeispiel der Erfindung wird nachfolgend unter Bezugnahme auf die Zeichnung erläutert. Darin zeigen:
- Fig. 1: eine Gesamtansicht einer erfindungsgemäßen Teigformmaschine;
- Fig. 2: eine Seitenansicht eines Satzes von Schneidrädern mit Druckrollen gemäß der Erfindung;
- Fig. 3: eine Ansicht entsprechend Fig. 2 mit Teigmaterial;
- Fig. 4: eine Teilansicht von alternativen Ausführungsformen der Druckrollen; und
- Fig. 5: Seitenansicht einer weiteren alternativen Ausführungsform .

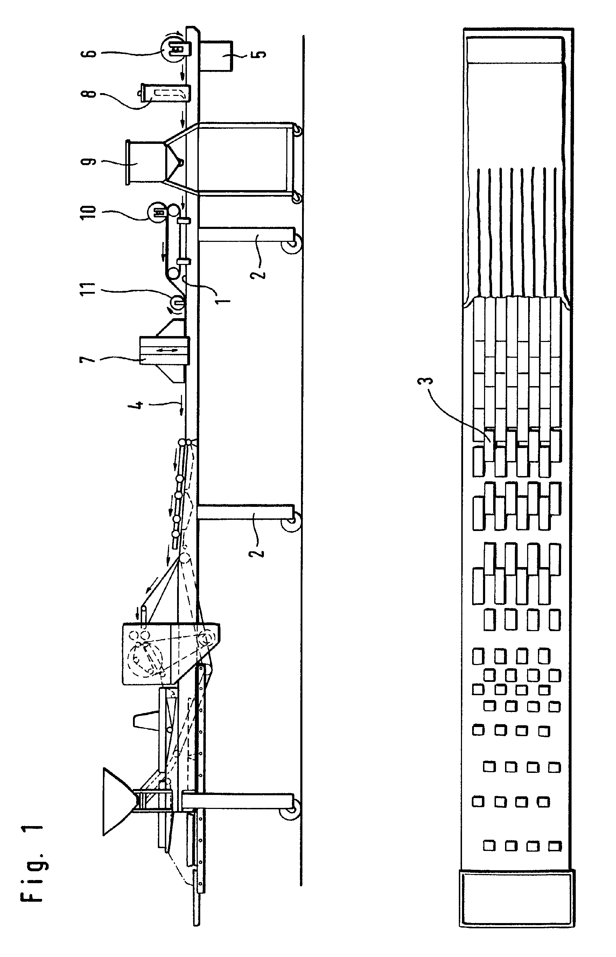

In Fig. 1 ist eine erfindungsgemäße Teigformmaschine dargestellt. Sie weist auf einem Gestell 2 eine Arbeitsfläche 1 auf. Die Arbeitsfläche 1 ist in dem dargestellten Ausführungsbeispiel als ein Förderband ausgeführt, das in einer Arbeitsrichtung 4 bewegt wird. Für den Antrieb des Förderbandes ist eine Antriebseinrichtung 5 vorgesehen.

An einem hinteren Ende der Teigformmaschine (in Fig. 1 rechts) ist eine Abwickelstation 6 angeordnet. Diese dient zur Aufnahme einer Teigrolle, von der ein Teigblatt abgewikkelt und auf der Arbeitsfläche in Richtung des Pfeils 4 transportiert wird. Dieses Teigblatt bildet eine untere Teiglage bei der Herstellung von Backstücken. In Arbeitsrichtung 4 sind eine Benetzungsstation 8 sowie eine Füllstation 9 angeordnet. Diese dienen zur Benetzung des Teiges bzw. zum Aufbringen von Stoffen zur Füllung der Backstücke. Daran anschließend ist eine Zuführstation 10 für eine obere Teiglage angeordnet. Weiter in Arbeitsrichtung 4 folgt eine Schneidstation 11, die mit Schneidrädern versehen ist und das Teigmaterial bestehend aus unterer und oberer Teiglage und dazwischen liegender Füllung in eine Mehrzahl von Reihen schneidet. Weiter folgt eine Trennstation 12, in der das Teigmaterial in Längsrichtung geschnitten wird und damit aus dem Teigmaterial einzelne Backstücke entstehen. Insoweit handelt es sich bei der Teigformmaschine 1 um eine handelsübliche Teigformmaschine. Auf eine nähere Erläuterung der hier nicht weiter interessierenden Komponenten und ihrer Funktionen wird daher verzichtet.

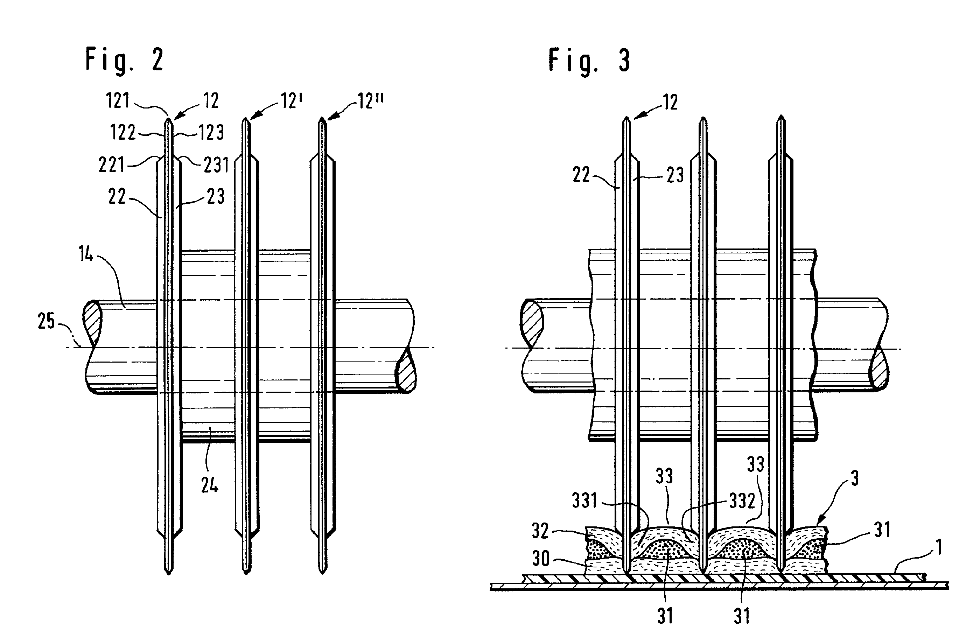

Die Schneidstation 11 weist eine Mehrzahl von Schneidrädern 12 auf, die äquidistant voneinander beabstandet auf einer Welle 14 angeordnet sind (siehe Fig. 2). Die Schneidräder 12 sind so ausgebildet, daß ihre Umfangsflächen als Schnittkanten 121 wirken. An ihren beiden Seitenflächen 122, 123 weist jedes der Schneidräder 12 jeweils eine Druckrolle 22, 23 auf. Die Druckrollen 22, 23 sind koaxial zu den Schneidrädern 12 und der Welle 14 angeordnet. Bei dem dargestellten Ausführungsbeispiel sind die Druckrollen aneinander benachbarter Schneidräder miteinander durch Hülsen 24 verbunden.

Die Druckrollen 22, 23 haben einen Durchmesser von etwa 106 mm, bei einem Durchmesser der Schneidräder 12 von etwa 120 mm. Jede der Druckrollen 22, 23 weist eine Breite von etwa 3 mm auf. Die Druckrollen 22, 23 haben Mantelflächen 221, 231, die zu einer Konusform geneigt sind. In dem dargestellten Ausführungsbeispiel beträgt der Winkel der konusartigen Mantelfläche zu der Rotationsachse 25 etwa 45°.

Das Schneidrad 12 mit seinen Druckrollen 22, 23 weist eine Breite von etwas 6 mm auf. Es können auch andere Breiten vorgesehen sein, beispielsweise etwa 8 mm, jedoch sind geringere Breiten vorzuziehen.

Das Material der Schneidräder 12 ist vorzugsweise Stahl. Die Druckrollen 22, 23 bestehen vorzugsweise aus Danamit. Es können auch andere Werkstoffe verwendet werden, die vorzugsweise so gewählt sind, daß sie nicht oder nur wenig zu einem Verkleben mit Teigmaterial neigen.

Wie bereits erwähnt ist eine Mehrzahl von Schneidrädern 12 auf der Welle 14 vorgesehen. In Fig. 2 sind exemplarisch 3 Schneidräder 12, 12', 12'' dargestellt. Die Schneidräder sind in einem Abstand von 20 mm angeordnet. Zieht man von diesem Abstand noch die Breite eines Druckrollenpaars 22, 23 ab, so ergibt sich ein freier Abstand von etwa 14 mm. Dies reicht aus, damit Füllmassestreifen 31 eine Breite von etwa 15 bis 18 mm haben können. Das Zusammenwirken der Schneidräder 12, der Druckrollen 22, 23 mit dem Teigmaterial 3 ist in Fig. 3 näher dargestellt. Man erkennt auf der Arbeitsfläche 1 als Unterlage das ausgebreitete Teigmaterial 3. Es setzt sich zusammen aus einer unteren Teiglage 30, einer oberen Teiglage 32 sowie dazwischen liegenden Füllmassestreifen 31. Die Füllmassestreifen 31, von denen jeder eine Breite von etwa 15 mm aufweist, sind mit einem Mittelabstand von 20 mm auf das untere Teigblatt 30 aufgebracht. Der Abstand der Füllmassestreifen 31 voneinander entspricht dem Abstand der Schneidräder 12. Das Teigmaterial 3 mit seinen Füllmassestreifen 31 kann daher von den Schneidrädern 12 so geschnitten werden, daß jeweils zwischen 2 Schneidrädern 12 eine Reihe Teigmaterial 3 mit einem eigenen Füllmassestreifen 31 geschnitten werden kann. Um zu verhindern, daß aus den Schneidkanten zwischen zwei Reihen Füllmasse 31 austritt, wird das Teigmaterial 3 in Randbereichen 331, 332 der jeweiligen Reihen 33 mittels der Druckrollen 22, 23 zusammengedrückt. Auf diese Weise wird verhindert, daß nach dem Schneiden der Reihen 33 mittels der Schneidräder 12 Füllungsmasse 31 an den geschnittenen Rändern austritt.

Eine Verbesserung der Abdichtwirkung wird durch die konusartige Form der Druckrollen 22, 23 erreicht. Die Druckrollen 22, 23 sind mit ihrem größeren Durchmesser zu dem Schneidrad 12 hin ausgerichtet. Damit wird erreicht, daß in außen gelegenen Teilen der Randbereiche 331, 332 der größte Druck auf das Teigmaterial 3 ausgeübt wird. Auf diese Weise wird unmittelbar an der Schneidkante, also an dem Ort, an dem die Gefahr eines Aufklaffens der Ränder am größten ist, der höchste Druck beim Zusammendrücken ausgeübt und damit die höchste Abdichtwirkung erzielt. Bedingt durch die Konusform der Druckrollen 22, 23 nimmt der Druck den weiter nach innen gelegenen Teilen der Randbereiche 331, 332 ab, also in den Teilen, die näher zu den Füllmassestreifen 31 liegen. Dadurch wird zusätzlich erreicht, daß die Gefahr eines ungewollten Zusammenquetschens des Füllmassestreifens 31 durch die Druckrollen 22, 23 vermindert ist.

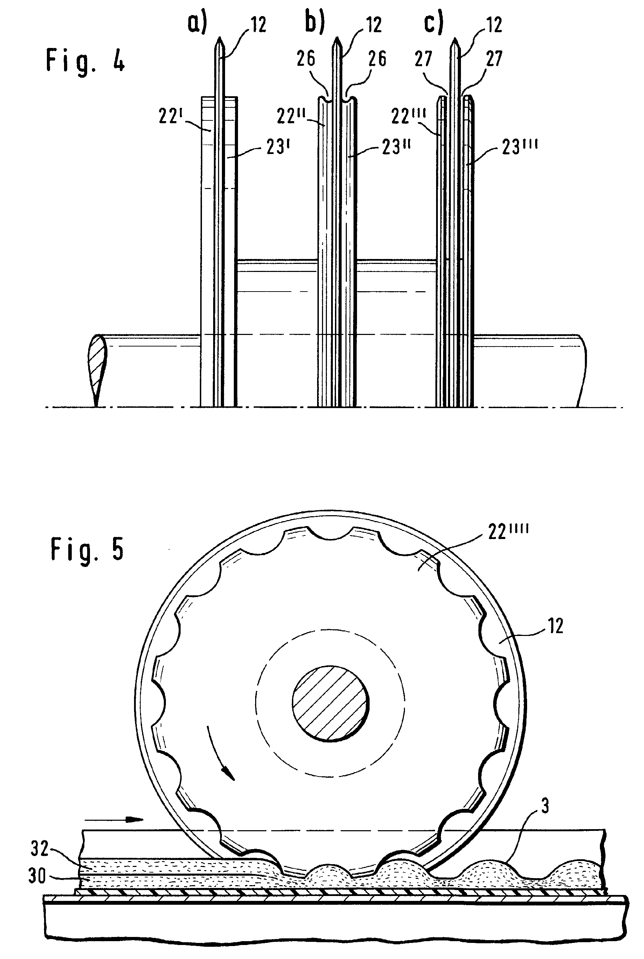

In Fig. 4 sind weitere Ausführungsformen des erfindungsgemäßen Schneidrads 12 mit Druckrollen dargestellt. In Fig. 4a ist eine Ausführungsform dargestellt, bei der eine andere Gestaltung der Druckrollen 22', 23' gewählt ist. Diese Druckrollen weisen im Unterschied zu den Druckrollen 22, 23 nach Fig. 2 keine konusförmige, sondern eine zylinderartige Mantelfläche auf. Damit wird erreicht, daß die Druckverteilung in den Randbereichen der Reihen des Teigmaterials gleichmäßig ist. Dies ist insbesondere dann von Vorteil, wenn verhältnismäßig empfindliche Teigsorten, wie z. B. Blätterteig, verarbeitet werden, bei denen eine Druckerhöhung an einigen Stellen wie bei den konusförmigen Druckrollen 22, 23 zu Beschädigungen in der Teigstruktur führen könnte. Bei der in Fig. 4b dargestellten Ausführungsform entsprechen die Druckrollen 22'', 23'' weitgehend den in Fig. 2 dargestellten, weisen im Unterschied zu denen jedoch eine Umfangsnut 24 auf, die jeweils an der dem Schneidrad 12 zugewandten Seite der Druckrollen 22'', 23'' angeordnet ist. Die Umfangsnut 24 dient zum Aufnehmen überschüssigen Teigmaterials im Übergangsbereich, zwischen dem Schneidrad 12 und den Druckrollen 22'', 23''. Im Betrieb wird die Nut 24 mit Teigmaterial aufgefüllt, so daß dann auch dieser Bereich druckübertragend zur Verfügung steht. Da in diesem Bereich jedoch die Druckübertragung über dem im Verhältnis zu dem Material der Druckrollen 22'', 23'' weicheren Teig erfolgt, wird der Gefahr unerwünschter lokaler Druckspitzen entgegengewirkt. Eine weitere Ausführungsform ist in Fig. 4c dargestellt. Hierbei sind die Druckrollen 22''', 23''' beabstandet von dem Schneidrad 12 angeordnet, so daß zwischen den Druckrollen 22''', 23''' und dem Schneidrad 12 ein Zwischenraum 27 entsteht. Bei dieser Ausführungsart sind die Druckrollen 22''', 23''' drehbeweglich gegenüber dem Schneidrad 12 gelagert. Damit können sie eine Drehgeschwindigkeit bzw. Umfangsgeschwindigkeit unabhängig von derjenigen des Schneidrads 12 aufweisen. Das ist insbesondere dann von Vorteil, wenn Geschwindigkeitsunterschiede zwischen der Vorschubgeschwindigkeit des Teigmaterials 3 auf der Arbeitsfläche 1 und der Umfangsgeschwindigkeit der Druckrollen 22''', 23''' minimiert werden sollen.

In Fig. 5 ist eine weitere Ausführungsform dargestellt. Sie unterscheidet sich von der in Fig. 2 dargestellten in erster Linie dadurch, daß die Druckrollen 22'''' eine gewellte Umfangsfläche aufweist. Dieses ist insbesondere von Vorteil für Teigmaterial, das aus gezogenem Teig, wie Plunderteig, besteht. Es hat sich gezeigt, daß Druck auf das Teigmaterial hauptsächlich durch Erhebungen der gewellten Umfangsfläche ausgeübt wird; im Bereich von Vertiefungen wird nur wenig oder kein Druck auf das Teigmaterial ausgeübt. Dadurch bleiben druckbedingte Beschädigungen der Schichtstruktur des gezogenen Teigs örtlich eng begrenzt. Da sie deshalb nur klein und stets von unbeschädigten Bereichen umgeben sind, wird das Aufgehverhalten des Teigmaterials nicht beeinträchtigt. Diese Ausführungsform hat ferner den Vorteil, daß durch die Wellung gewünschtenfalls eine Strukturierung der Oberfläche des Teigmaterials 3 erzeugt werden kann.

## Patentansprüche

1. Teigformmaschine für gefüllte Backstücke, insbesondere gefülltes Kleingebäck, mit einer Arbeitsfläche (1) zum Auflegen von Teigmaterial (3) für die Backstücke, einer Mehrzahl von Schneidrädern (12), die zum Schneiden des Teigmaterials (3) auf der Arbeitsfläche (1) angeordnet sind, und einer Antriebseinrichtung (5) zum Erzeugen einer Relativbewegung zwischen den Schneidrädern (12) und der Arbeitsfläche (1) in einer Arbeitsrichtung (4), **dadurch gekennzeichnet, daß** die Schneidräder (12) mit Druckrollen (22, 23) versehen sind, die seitlich an den Schneidrädern (12) und koaxial zu ihnen angeordnet sind.

2. Teigformmaschine nach Anspruch 1, **dadurch gekennzeichnet, daß** die Druckrollen (22, 23) eine Konusform aufweisen.

3. Teigformmaschine nach Anspruch 2, **dadurch gekennzeichnet, daß** die Druckrollen (22, 23) mit ihrem größeren Durchmesser zur Schneidscheibe hin weisend angeordnet sind.

4. Teigformmaschine nach Anspruch 2 oder 3, **dadurch gekennzeichnet, daß** der Konus eine gegenüber seiner Mittelachse um einen Winkel von 30° bis 60°, vorzugsweise 45°, geneigte Mantelfläche aufweist.

5. Teigformmaschine nach einem der Ansprüche 1 bis 4, **dadurch gekennzeichnet, daß** die Schneidräder (12) mit den Druckrollen (22, 23) quer zur Arbeitsrichtung über die volle Breite der Arbeitsfläche (1) angeordnet sind.

6. Teigformmaschine nach einem der Ansprüche 1 bis 5, **dadurch gekennzeichnet, daß** das Verhältnis des Radius des Schneidrads (12) zu dem der Druckrollen (22, 23) etwa 0,7 bis 0,95, vorzugsweise 0,85 bis 0,9, beträgt.

7. Teigformmaschine nach einem der Ansprüche 1 bis 6, **dadurch gekennzeichnet, daß** die Druckrollen (22''', 23''') drehbeweglich gegenüber dem Schneidrad (12) angeordnet sind.

8. Verfahren zum Formen von gefüllten Backstücken, mit den Schritten:
- Ausbringen einer unteren Teiglage (30),
- Auftragen einer Füllung (31) auf die untere Teiglage,
- Aufbringen einer oberen Teiglage (32) auf die untere Teiglage (30) mit der Füllung (31),
- Schneiden der Teiglagen mit der Füllung (30, 31, 32) in Reihen (33),
**gekennzeichnet durch** Zusammendrücken von Rändern (131, 132) im Schnittbereich gleichzeitig mit dem Schneiden.
